# EUROPEAN PATENT APPLICATION

(11) **EP 2 333 276 A1**
(43) Date of publication of application: **15.06.2011**
(21) Application number: 09817462.6
(22) Date of filing: 29.09.2009
(51) Int. Cl.: F02B 47/02, F02D 1/02, F02D 19/12, F02D 45/00, F02M 25/022, F02M 31/125

(54) **METHOD FOR CONTROLLING OPERATION OF DIESEL ENGINE, APPARATUS FOR CONTROLLING OPERATION OF DIESEL ENGINE, DIESEL ENGINE, AND SHIP**

(30) Priority: 30.09.2008 JP 2008255491
(71) Applicant: Kawasaki Jukogyo Kabushiki Kaisha, Kobe-shi, Hyogo 650-8670 (JP)
(72) Inventor: NOGAMI, Tetsuo, . (JP); HIGASHIDA, Masanori, . (JP)
(74) Representative: Witte, Weller & Partner
(86) International application number: PCT/JP2009/004972
(87) International publication number: WO 2010/038420

(57) **Abstract**

In a method for controlling operations of a diesel engine according to the present invention, to control the number of rotations of the diesel engine using a water-emulsion fuel, a fuel injection amount is adjusted in accordance with a water addition ratio that is a ratio of water to a fuel. Especially, a required water addition ratio set in a water addition ratio setting device (11) to reduce a NOx concentration of an exhaust gas is limited by an calculating component (8) and the like in consideration of handling of the water-emulsion fuel, and the fuel injection amount is adjusted in accordance with the limited water addition ratio (x).

## Description

### Technical Field

The present invention relates to an operation control method for controlling operations of a diesel engine using a water-emulsion fuel, an operation controller and diesel engine, each configured to carry out such control method, and a ship with the diesel engine.

### Background Art

In operation control of a diesel engine, the number of rotations of the engine is controlled by adjusting a fuel injection amount by commonly using a governor or the like. When adjusting the fuel injection amount, feedback of the number of rotations of the engine is performed. To be specific, a set value of the number of rotations of the engine and an actually measured value of the number of rotations of the engine are compared with each other, and the fuel injection amount is increased or decreased in accordance with the result of the comparison. However, normally, limitation of the fuel amount is also performed by using a torque limiter for preventing the generation of excessive torque or a scavenging-air pressure limiter for balancing with scavenging-air pressure. This operation control is widely known as an extremely-common method when the diesel engine uses a pure fuel to which water is not added.

In some cases, water may be added to the fuel in the diesel engine for a ship or the like. To be specific, water is mixed with A-type heavy oil, C-type heavy oil, or the like to prepare a water-emulsion fuel, and such water-emulsion fuel is supplied to the diesel engine. Thus, a combustion temperature of the engine is lowered, and the amount of NOx in exhaust gas is reduced. Such technology is described in, for example, PTL 1 below.

### Citation List

### Patent Literature

PTL 1: Japanese Patent No. 3717315

### Summary of Invention

### Technical Problem

An appropriate operation control method for controlling the operations of the diesel engine using the water-emulsion fuel has not been established yet. This is mainly because solutions to the following two problems have not been found.

One problem is a countermeasure against the variation in output torque. The water-emulsion fuel contains water. Therefore, the output torque of the engine when using the water-emulsion fuel as a fuel becomes lower than that when using the pure fuel which is the same in amount as the water-emulsion fuel. On this account, in the case of using the water-emulsion fuel, the operation control method needs to be modified in some way.

In this case, the above-described common method for controlling the engine while performing the feedback of the number of rotations of the engine can be used. However, in this case, after the number of rotations of the engine changes by the variation in the output torque, the feedback is performed, and the number of rotations is then modified to the set value. Therefore, control delay occurs. In addition, it is necessary to change the setting of the torque limiter or scavenging-air pressure limiter, so that an existing control device cannot be used without any change.

Another problem is a countermeasure against a case where the amount of water added (water addition ratio) needs to be increased to adequately reduce the NOx concentration of the exhaust gas.

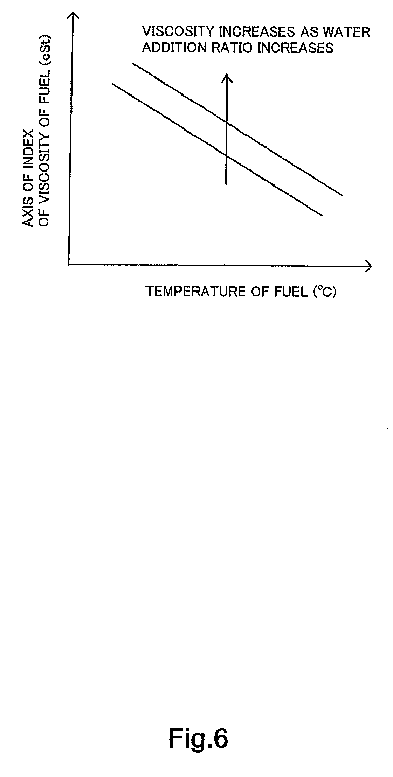

As shown in Fig. 6, the viscosity of the water-emulsion fuel increases as the water addition ratio increases. In the case of the water-emulsion fuel using heavy oil (especially, the C-type heavy oil) as a base, the viscosity of the water-emulsion fuel may be expected to become too high by increasing the water addition ratio, and it is unclear whether or not the water addition ratio can be set without limit. Moreover, even if the water addition ratio is limited, the control method using the water addition ratio has not been proposed so far.

An object of the present invention is to solve the above problems and provide an appropriate operation control method for controlling the operations of the diesel engine using the water-emulsion fuel. Another object of the present invention is to provide an appropriate operation controller and diesel engine, each capable of performing such operation control method.

### Solution to Problem

A diesel engine operation control method according to the present invention is a method for controlling operations of a diesel engine using a water-emulsion fuel and includes the step of adjusting a fuel injection amount in accordance with a water addition ratio that is a ratio of water to a fuel.

This method can prevent or suppress the reduction in the output torque of the engine when the pure fuel is converted into the water-emulsion fuel and the variation in the output torque when the water addition ratio of the water-emulsion fuel varies. In a conventionally common operation control method, the fuel injection amount is adjusted after the variation in the number of rotations of the engine is detected. However, in the method of the present invention, before the number of rotations of the engine varies by the difference between the water addition ratios, the fuel injection amount is adjusted in accordance with the water addition ratio for the fuel. Therefore, the control delay does not occur.

A required water addition ratio set for a component ratio requirement of an exhaust gas may be limited in consideration of characteristics of the water-emulsion fuel. Herein, the component ratio requirement of the exhaust gas is set in accordance with, for example, a necessary reduction amount of the NOx concentration. Examples of the characteristics of the water-emulsion fuel are that the temperature increase by heating is limited although the viscosity lowers by heating and that the flow of the fuel in a pipe becomes slow as the viscosity increases and the energy necessary for injecting the fuel from the injection valve increases.

In a case where the required water addition ratio is limited as above and the water-emulsion fuel based on a high-viscosity fuel, such as the C-type heavy oil, is used, troubles are prevented, that is, the flow of the fuel in the pipe does not become slow due to high viscosity, and the injection of the fuel into the cylinder does not become difficult.

As is clear from Fig. 6, a curve of the viscosity of the water-emulsion fuel differs depending on its property. The viscosity increases by the addition of water whereas it decreases by the temperature increase. The increase in viscosity can be suppressed by heating the fuel by, for example, a heater when the water addition ratio is increased. However, actually, a heat exchange efficiency for heating has a limit, and troubles occur if the water in the fuel evaporates. Therefore, a certain level or more of the temperature increase is difficult. On this account, the viscosity cannot be adjusted without limit, so that increasing the water addition ratio in accordance with the required water addition ratio tends to cause troubles.

However, in accordance with the above method, the required water addition ratio is appropriately limited, so that smooth fuel supply is always carried out. Moreover, in accordance with the method, adopted as a criteria for adjusting the fuel injection amount is not the required water addition ratio but the actual water addition ratio limited as above. Therefore, the fuel injection amount is appropriately determined, and smooth control of the number of rotations is realized.

The required water addition ratio may be limited in such a manner that: a difference between a temperature increase required value and a realizable temperature increase limit value is calculated, the temperature increase required value being determined for lowering a viscosity of the water-emulsion fuel up to a predetermined viscosity by heating the water-emulsion fuel; a temperature increase of the water-emulsion fuel is suppressed by the difference; and the required water addition ratio is lowered by a water addition ratio width corresponding to a width of the viscosity which is not lowered since the temperature increase of the water-emulsion fuel is suppressed.

With this, the water-emulsion fuel can be heated only within a realizable range. Moreover, even if there is a temperature range which is not realized in the temperature increase required value and there is a possibility that the viscosity cannot be lowered up to a predetermined viscosity by this temperature range, the water addition ratio is lowered from the required water addition ratio by a degree corresponding to the viscosity width which cannot be lowered. As a result, the fuel viscosity is controlled to the predetermined viscosity. To be specific, the required water addition ratio is appropriately limited based on the limit of the heating of the fuel. Thus, the viscosity of the fuel can be maintained at target viscosity, and the smooth fuel supply is always carried out.

It is preferable that in a case where the diesel engine uses a fuel control rack as a governor to adjust the fuel injection amount, limit of movement of the fuel control rack be changed in accordance with the water addition ratio.

The operation control of the diesel engine becomes further preferable by not only adjusting the fuel injection amount but also changing the limit of the movement of the fuel control rack in accordance with the water addition ratio. Even if some kind of external force or abnormal variation of a control signal acts, the movement of the fuel control rack does not exceed the above limit value determined in accordance with the water addition ratio. Thus, bad influences do not act on the engine, and the protection performance of the engine improves. It is more preferable to adopt the limited water addition ratio than the required water addition ratio as the water addition ratio for changing the limit of the movement of the fuel control rack.

A pure fuel injection amount may be determined by a control means set to use a pure fuel, and the pure fuel injection amount may corrected in accordance with the water addition ratio to adjust the fuel injection amount of the water-emulsion fuel.

With this, while adopting an operation control means widely used when using the pure fuel, a new matter that is the correction corresponding to the water addition ratio is added. With this, the method of the invention can be carried out. If an existing method can be adopted, the method of the invention can be easily introduced to the diesel engines in operation, and control devices can be adjusted easily.

Moreover, a temperature and viscosity of a pure fuel may be measured to identify a property of the pure fuel, and the water addition ratio may be limited based on the identified property and a temperature upper limit and viscosity upper limit corresponding to the identified property Herein, examples of the property are the brand of the fuel, the type of the fuel, and the like and are factors for determining the temperature upper limit and the viscosity upper limit when the fuel is heated.

For example, if the pure fuel having a different property from the fuel in the tank is added to the fuel tank, these fuels are mixed with each other, and the property of the mixture may become unclear. In this case, the property of the fuel is determined based on, for example, data indicating the relation among the temperature, the viscosity, and the property, the temperature upper limit and viscosity upper limit of the water-emulsion fuel are specified by the above property, and the water addition ratio limit value is calculated based on the above upper limits. The water addition ratio is limited based on the water addition ratio limit value calculated as above. Thus, the water-emulsion fuel is prevented from having an excessively high viscosity, and the smooth fuel supply is realized.

When a property of a pure fuel is known, a temperature and viscosity of the water-emulsion fuel may be measured to detect the water addition ratio of the water-emulsion fuel, and the fuel injection amount may be adjusted in accordance with the water addition ratio.

In a case where the property of the pure fuel used is known, the current water addition ratio of the fuel can be detected by measuring the viscosity and temperature of the water-emulsion fuel by the viscometer, the thermometer, and the like. Then, the fuel injection amount is corrected based on the water addition ratio detected as above. Thus, the variation in the output torque due to, for example, the variation in the water addition ratio can be appropriately prevented or suppressed, and the smooth control of the number of rotations can be carried out.

An operation controller of a diesel engine according to the present invention is attached to the diesel engine using a water-emulsion fuel and carries out the above method.

Moreover, a diesel engine according to the present invention is a diesel engine using a water-emulsion fuel and carries out the above method. A ship according to the present invention includes the above diesel engine.

Each of the operation controller and the diesel engine can carry out the above operation control method to realize the appropriate supply of the water-emulsion fuel and the smooth control of the number of rotations of the engine.

The above object, other objects, features and advantages of the present invention will be made clear by the following detailed explanation of preferred embodiments with reference to the attached drawings.

### Advantageous Effects of Invention

In accordance with the present invention, the variations in the output torque and the number of rotations of the engine when the water addition ratio of the water-emulsion fuel varies can be appropriately prevented or suppressed without control delay.

### Brief Description of Drawings

[Fig. 1] Fig. 1 is a diagram showing a system configured to supply a water-emulsion fuel to a diesel engine according to the present invention.
[Fig. 2] Fig. 2 is a block diagram showing an operation controller of the diesel engine according to Embodiment 1 of the present invention.
[Fig. 3] Fig. 3 is a block diagram showing the operation controller of the diesel engine according to Embodiment 2 of the present invention.
[Fig. 4A] Fig. 4A is a block diagram showing the operation controller of the diesel engine according to Embodiment 3 of the present invention.
[Fig. 4B] Fig. 4B is a graph which shows a relation among a fuel temperature, a fuel viscosity, and a viscosity at a predetermined temperature and may be referred by a water addition ratio determining device of the operation controller shown in Fig. 4A.
[Fig. 4C] Fig. 4C is one example of a three-dimensional map which may be determined by a water addition ratio limit setting device of the operation controller shown in Fig. 4A.
[Fig. 5A] Fig. 5A is a block diagram showing the operation controller of the diesel engine according to Embodiment 4 of the present invention.
[Fig. 5B] Fig. 5B is one example of the three-dimensional map which may be referred by a water addition ratio detecting device of the operation controller shown in Fig. 5A.
[Fig. 6] Fig. 6 is a chart showing common viscosity characteristics of the water-emulsion fuel using heavy oil as a base.

### Reference Signs List

- 1: viscosity setting switching device
- 4: control device
- 8: calculating component
- 11: water addition ratio setting device
- 13: limiting component
- 14: calculating component
- 31: oil property determining device
- 41: water addition ratio detecting device
- 50: control portion

### Description of Embodiments

Hereinafter, embodiments of the present invention will be explained in reference to the attached drawings.

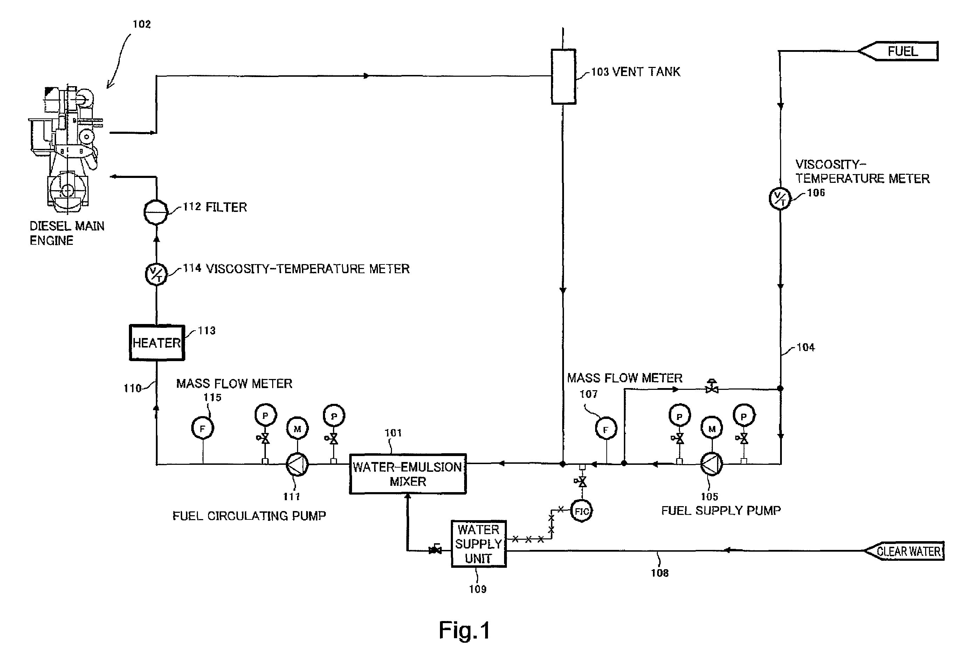

Fig. 1 is a diagram showing a system 100 configured to supply a water-emulsion fuel to a diesel engine. In the system 100, a pure fuel and clear water are mixed with each other by a water-emulsion mixer (hereinafter simply referred to as a "mixer") 101, and the water-emulsion fuel prepared by mixing the pure fuel and the clear water is supplied to a main engine 102 of the diesel engine. Specifically, the water-emulsion fuel is supplied to a fuel valve (not shown) of the main engine 102, and a required injection amount of water-emulsion fuel is injected from the fuel valve to a cylinder of the main engine 102. The fuel from the main engine 102 is recovered by a vent tank 103, and the recover fuel flows into a fuel channel 104 and returns to the mixer 101.

A fuel supply pump 105 is disposed on the fuel channel 104 extending from a tank (not shown) storing the pure fuel to the mixer 101, and the pure fuel in the tank is supplied to the mixer 101 by the pump 105. In addition, a viscosity-temperature meter 106 configured to measure the viscosity and temperature of the pure fuel and a mass flow meter 107 configured to measure the mass flow rate of the pure fuel flowing into the mixer 101 are disposed on the fuel channel 104. Utilized as the pure fuel is A-type heavy oil, C-type heavy oil, a mixture of the A-type heavy oil and the C-type heavy oil, or the like.

A supply source of the clear water is, for example, a demineralizer (not shown) provided in a ship with the diesel engine, and a water supply unit 109 is disposed on a clear water channel 108 extending from the supply source to the mixer 101. The clear water is supplied to the mixer 101 at a required flow rate by the operation of the water supply unit 109.

A fuel circulating pump 111 is disposed on a water-emulsion channel 110 extending from the mixer 101 to the main engine 102, and the water-emulsion fuel is supplied from the mixer 101 to the main engine 102 by the pump 111. A filter 112 configured to filter the water-emulsion fuel is disposed on a downstream portion of the water-emulsion channel 110. Moreover, a fuel heater 113 is disposed on the water-emulsion channel 110 and can heat the water-emulsion fuel supplied to the main engine 102. Further, a viscosity-temperature meter 114 and a mass flow meter 115 are disposed on the water-emulsion channel 110. The viscosity-temperature meter 114 is configured to measure the viscosity and temperature of the water-emulsion fuel having been heated by the fuel heater 113. The mass flow meter 115 is configured to measure the mass flow rate of the water-emulsion fuel having been pumped from the fuel circulating pump 111 and flowing into the fuel heater 113.

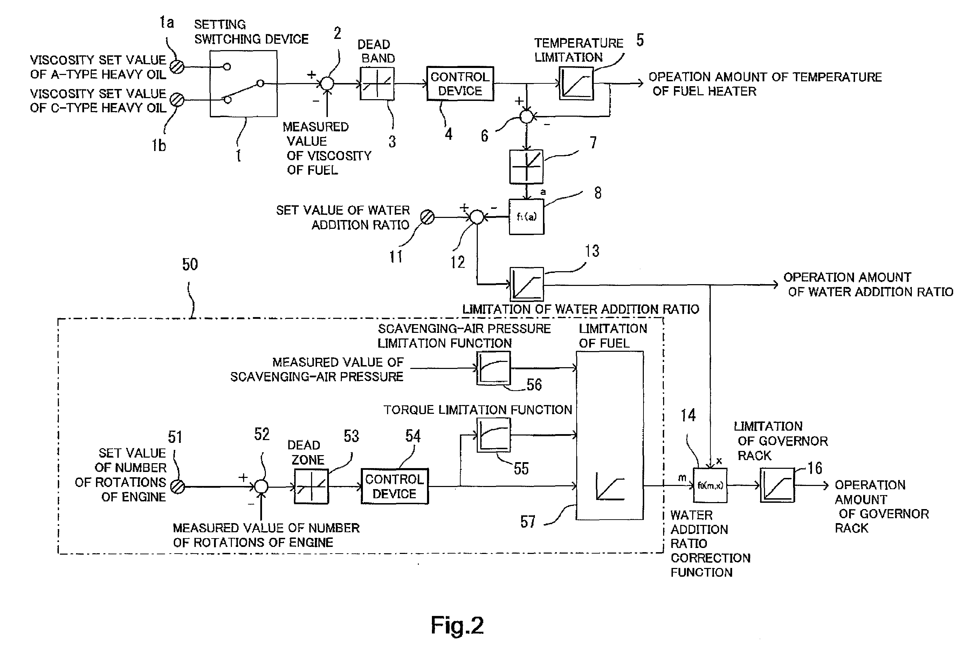

The operation controller according to Embodiment 1 shown in Fig. 2 is attached to the diesel engine which may use the water-emulsion fuel. The operation controller controls the number of rotations of the diesel engine which uses a fuel control rack (hereinafter simply referred to as a "governor rack") as a governor. In consideration of the use of the water-emulsion fuel, the operation controller includes a viscosity operating portion and a water addition ratio operating portion. Moreover, the operation controller further includes a control portion 50 that is a commonly-used control portion configured to perform feedback of the number of rotations of the engine to determine and output the fuel injection amount. Then, the fuel injection amount output from the control portion 50 is corrected (adjusted) based on the water addition ratio finally determined by the viscosity and water addition ratio operating portions, and the governor rack is operated based on the corrected fuel injection amount.

The control portion 50 is commonly used when using the pure fuel whose water addition ratio is zero. The control portion 50 includes a rotation setting portion 51, a comparing portion 52, a dead band unit 53, a control device 54, a torque limiter 55, a scavenging-air pressure limiter 56, and a fuel limiting portion 57.

A set value of the number of rotations of the engine is set in the rotation setting portion 51, and the comparing portion 52 compares the set value with an actually measured value of the number of rotations of the engine, the actually measured value having been measured and fed back. A difference therebetween obtained by the comparing portion 52 is input to the control device 54 (such as a PI control portion) via the dead band unit 53 and is further input to the fuel limiting portion 57 via the control device 54. The output of the control device 54 is also input to the torque limiter 55 having a torque limitation function, and a limit value is input from the torque limiter 55 to the fuel limiting portion 57. Moreover, since it is necessary to balance the fuel amount with respect to the scavenging-air pressure, a measured value of the scavenging-air pressure measured by the scavenging-air pressure sensor is input to the scavenging-air pressure limiter 56 having a scavenging-air pressure limitation function, and a limit value is also input from the scavenging-air pressure limiter 56 to the fuel limiting portion 57. The fuel limiting portion 57 is configured to output a limited fuel injection amount m based on the outputs from the limiters 55 and 56. With this, it is possible to prevent the diesel engine from generating excessive torque.

The above configurations and functions are widely adopted in the operation control of the diesel engine configured to assume the use of the pure fuel. The operation controller of the present embodiment executes control operations in consideration of the use of the water-emulsion fuel but incorporates the existing control portion 50 without changing the limitation functions of the limiters 55 and 56 and the like.

The viscosity operating portion is a portion which is newly added to the operation controller of the diesel engine. The viscosity operating portion includes a setting switching device 1, a comparing portion 2, a dead band unit 3, a control device 4, a limiting component 5, a comparing portion 6, a component 7, and a calculating component 8.

The setting switching device 1 is a component configured to set the viscosity of the water-emulsion fuel and can switch the setting of the viscosity by an operator. For example, a viscosity setting portion 1a in which a viscosity set value of the A-type heavy oil is preset and a viscosity setting portion 1b in which a viscosity set value of the C-type heavy oil is preset are connected to the setting switching device 1. In the case of using the A-type heavy oil as a base, the setting switching device 1 is switched to select a state where the set value is input from the viscosity setting portion 1a to the setting switching device 1. With this, the viscosity set value is determined as 2 to 5 cSt corresponding to the A-type heavy oil. Moreover, in the case of using the C-type heavy oil as a base, a state where the set value is input from the viscosity setting portion 1b to the setting switching device 1 is selected. With this, the viscosity set value is determined as 10 to 20 cSt corresponding to the C-type heavy oil. The comparing portion 2 compares the viscosity set value determined by the setting switching device 1 with an actually measured value of the viscosity of the fuel, the actually measured value being measured by the viscosity-temperature meter 114 (see Fig. 1). A difference therebetween obtained by the comparing portion 2 is input to the control device 4 (such as a PI control portion) via the dead band unit 3. Based on this difference, the control device 4 calculates a temperature increase width (temperature increase required value) necessary for setting the water-emulsion fuel to the viscosity set value. This temperature increase required value is input to the limiting component 5 in which an upper limit of the temperature increase is set in consideration of performance limit of the fuel heater 113 (see Fig. 1) and avoidance of various troubles. In a case where the temperature increase required value exceeding the limit is input, the limiting component 5 controls the temperature of the fuel heater such that the fuel temperature increases by the limited temperature (temperature increase limit value).

The temperature increase required value that is an output of the control device 4 and the temperature increase limit value that is an output of the limiting component 5 are input to the comparing portion 6. The comparing portion 6 calculates a difference between these values and outputs the difference to the component 7. Based on the difference, the component 7 calculates a temperature width a indicating a degree of suppression of the temperature increase of the fuel, the temperature increase being suppressed since the temperature increase limit value is smaller than the temperature increase required value. The temperature width *a* is input to the calculating component 8. In the calculating component 8, by a function f₁(a), the temperature width *a* is converted into a water addition ratio width corresponding to a viscosity width indicating a degree of suppression of the viscosity decrease of the fuel by the temperature width *a*. Of course, when the difference between the temperature increase required value and the temperature increase limit value is zero, each of the temperature width *a* and the water addition ratio width corresponding to the temperature width *a* is also zero.

The water addition ratio operating portion is a portion which is newly added to the operation controller of the diesel engine. The water addition ratio operating portion includes a water addition ratio setting device 11, a subtracting portion 12, a limiting component 13, and a calculating component 14.

As a set value of the water addition ratio, a required water addition ratio is input to the water addition ratio setting device 11. The required water addition ratio is a ratio of the addition of water to the water-emulsion fuel and is a ratio necessary to reduce the NOx concentration of the exhaust gas by a predetermined width. In the subtracting portion 12, the water addition ratio width obtained by the calculating component 8 is subtracted from the required water addition ratio. Thus, the water addition ratio limited based on the temperature limitation within a realizable range is calculated. The obtained water addition ratio is further input to the limiting component 13, and the limiting component 13 calculates the realizable water addition ratio based on the performance of an injector used. For example, in a case where the required water addition ratio is 50% and the water addition ratio width is 10%, the subtracting portion 12 calculates that the water addition ratio is 40%. Then, for example, the limiting component 13 may convert the water addition ratio of 40% into the water addition ratio of about 35%. This numerical value is just one example for ease of explanation and may be suitably changed depending on situations.

The water addition ratio obtained by the limiting component 13 is regarded as a final water addition ratio x. The limiting component 13 operates devices, such as the water supply unit 109 (see Fig. 1) of the diesel engine, to adjust the water addition ratio such that the actual water addition ratio becomes the final water addition ratio x. Moreover, the water addition ratio x and the fuel injection amount m output from the control portion 50 are input to the calculating component 14. The calculating component 14 calculates the appropriate fuel injection amount of the water-emulsion fuel based on the water addition ratio x by using a function f₀(m, x). The appropriate fuel injection amount herein is a fuel injection amount by which the output torque of the engine becomes constant regardless of the water addition ratio. Here, the function f₀(m, x) may be, for example, equal to (1 + x/100)·m (herein, x is a percentage). However, this relational expression is just one example, and the function f₀(m, x) may be shown by the other relational expression derived by tests.

In the diesel engine of the present embodiment, a predetermined injection amount of fuel is injected from the fuel valve (not shown) based on the displacement of the governor rack. Normally, the governor rack is configured to mechanically displace within a certain movement range even in a case where the displacement of the governor rack is electrically controlled. Therefore, an adjustable range of the injection amount controlled by utilizing the governor rack has a limit in accordance with the limit of the movement of the governor rack. In this case, the fuel injection amount obtained by the calculating component 14 is input to a limiting component 16 corresponding to the governor rack. The limiting component 16 calculates the fuel injection amount limited in consideration of the limit of the movement. The limiting component 16 causes the governor rack to inject the limited injection amount of fuel.

Thus, the water-emulsion fuel is appropriately supplied, and the number of rotations of the engine is smoothly controlled.

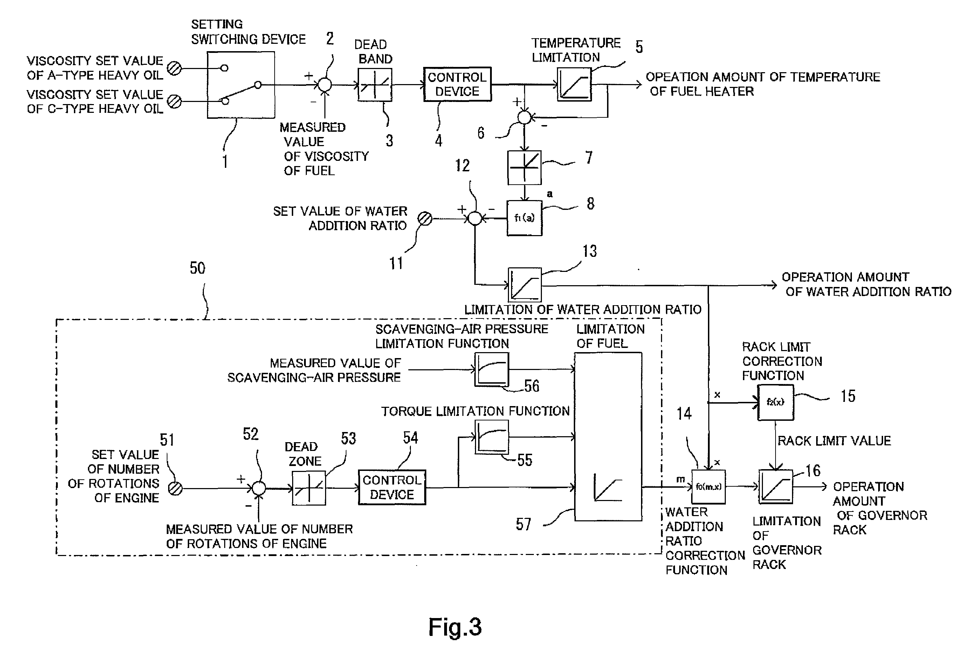

As with Embodiment 1 shown in Fig. 2, the control portion 50 that is a commonly-used control portion is incorporated in the operation controller according to Embodiment 2 shown in Fig. 3. Moreover, the operation controller according to Embodiment 2 is configured such that the fuel injection amount that is the output of the control portion 50 is corrected in accordance with the water addition ratio determined by the viscosity and water addition ratio operating portions in consideration of the use of the water-emulsion fuel, and the appropriate fuel injection amount is thus obtained. The same reference signs are used for the same components as in Fig. 2, and a repetition of the same explanation is avoided.

Here, the operation controller of the present embodiment includes a calculating component 15 to change the limit of the movement of the governor rack based on the water addition ratio x (that is, the water addition ratio obtained by limiting the required water addition ratio). The water addition ratio x obtained by the limiting component 13 is input to the calculating component 15, and a movement limit value of the governor rack is determined by a correction function f₂(x). The movement limit value is input to the limiting component 16. Here, the function f₂(x) may be, for example, equal to (1 + x/100)·L₀. Here, L₀ denotes a movement limit value of the governor rack in the case of the pure fuel. However, this relational expression is just one example. The correction function f₂(x) may be shown by the other relational expression obtained by tests. The limit of the movement of the governor rack is changed by the limiting component 16 based on the input movement limit value. Therefore, preferable control operations can be carried out while improving mechanical safety of the engine.

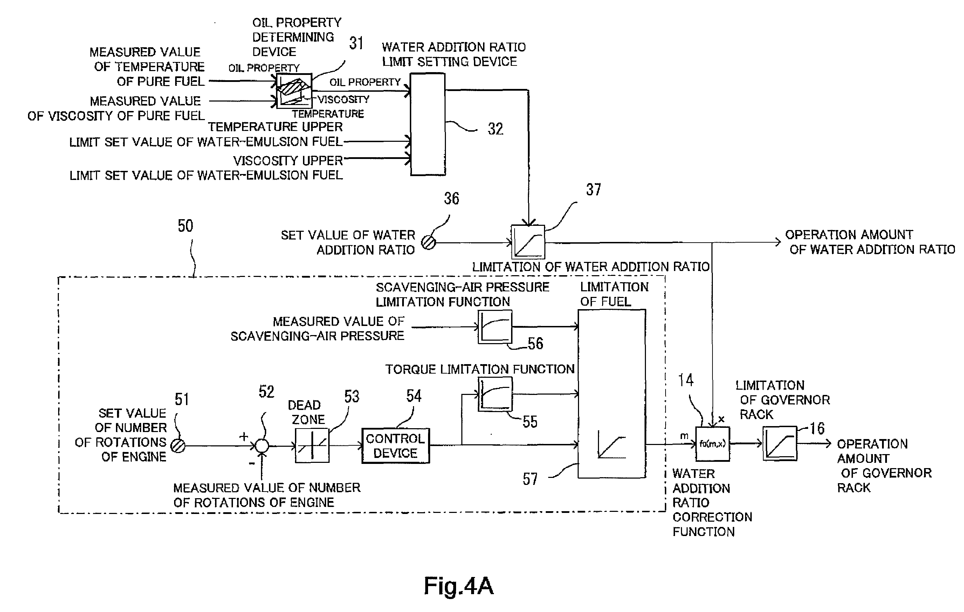

The operation controller according to Embodiment 3 shown in Fig. 4A may be preferably used when executing the operation control of the diesel engine in a case where the property of the pure fuel used in the water emulsion are unknown. Herein, examples of the property are the brand of the fuel, the type of the fuel, and the like and become factors for determining fuel characteristics, such as the temperature upper limit and viscosity upper limit when the fuel is heated. The operation controller of the present embodiment measures the temperature and viscosity of the pure fuel used and inputs these measured values to an oil property determining device 31 to identify an oil property of the fuel. Such control method is useful when the oil property of the fuel in the tank becomes unclear by mixing two or more types of pure fuels.

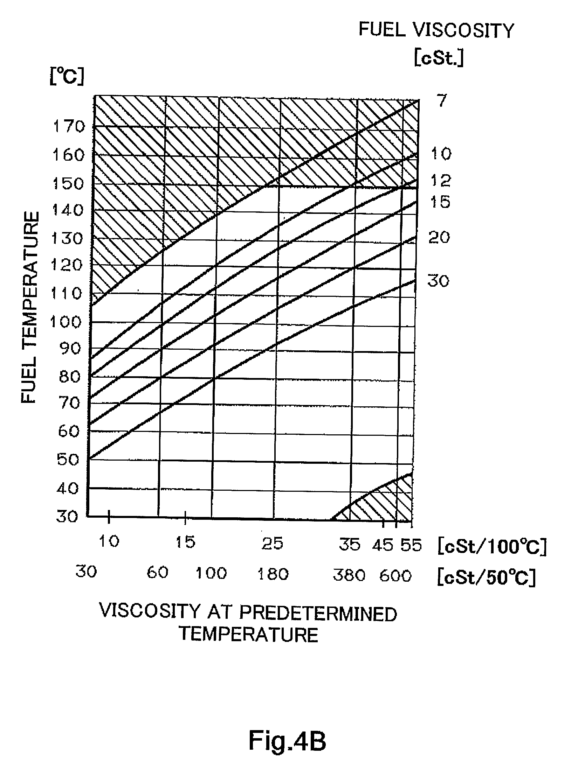

The oil property determining device 31 calculates the viscosity at a predetermined temperature in accordance with the temperature of the pure fuel and the viscosity of the pure fuel by utilizing the relation shown in Fig. 4B. In addition, the oil property determining device 31 determines the oil property of the pure fuel in the tank based on the viscosity at the predetermined temperature. The temperature and viscosity of the pure fuel are measured by the viscosity-temperature meter 106 (see Fig. 1) disposed on the fuel channel 104 (see Fig. 1), and the measured values of the viscosity-temperature meter 106 are input to the oil property determining device 31.

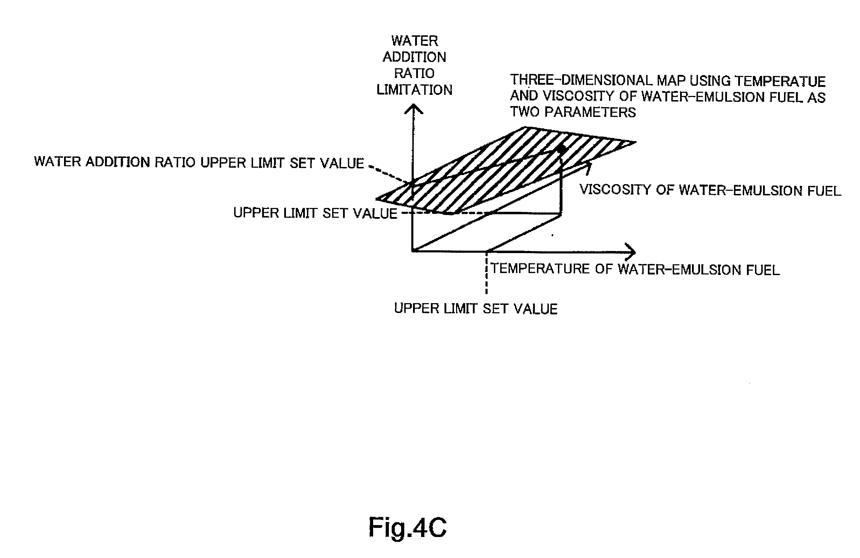

Then, after finding out the oil property of the pure fuel, a water addition ratio limit setting device 32 determines a three-dimensional map based on the oil property, the three-dimensional map being used to obtain an upper limit of the water addition ratio in accordance with the temperature and viscosity of the water-emulsion fuel prepared by mixing the pure fuel and the clear water. Fig. 4C shows one example of a map (see a hatching region) which may be determined based on a certain oil property and is used to obtain the upper limit of the water addition ratio. By referring to the map determined as above, the water addition ratio limit setting device 32 can calculate a water addition ratio upper limit set value based on the relation among a temperature upper limit set value, a viscosity upper limit set value, and the oil property.

The set value of the water addition ratio for the fuel corresponds to a target reduction amount of the NOx concentration of the exhaust gas and is input to a water addition ratio setting device 36. A calculation result of the water addition ratio limit setting device 32 is reflected in the set value of the water addition ratio. To be specific, a water addition ratio limitation condition in a limiting component 37 is determined based on the water addition ratio upper limit set value calculated by the water addition ratio limit setting device 32, and the limiting component 37 converts the water addition ratio set value into the limited water addition ratio x.

In the present embodiment, the control portion 50 that is a commonly-used control portion for the pure fuel is incorporated, and the fuel injection amount m that is the output of the control portion 50 and the water addition ratio x are input to the calculating component 14. The calculating component 14 determines the appropriate fuel injection amount by the function f₀(m, x) and outputs the fuel injection amount to the limiting component 16. The limiting component 16 causes the governor rack to inject the water-emulsion fuel, the injection amount of which is limited in consideration of the limit of the movement of the governor rack. With this, even if the pure fuel is unknown, the appropriate operation control of the diesel engine can be carried out while suppressing the variation in the output torque.

One feature of the present embodiment is that the components 31 and 32 configured to identify the property of the fuel are included. In addition, the present embodiment can carry out the water addition ratio limitation that is a feature of each of Embodiments 1 and 2 shown in Figs. 2 and 3.

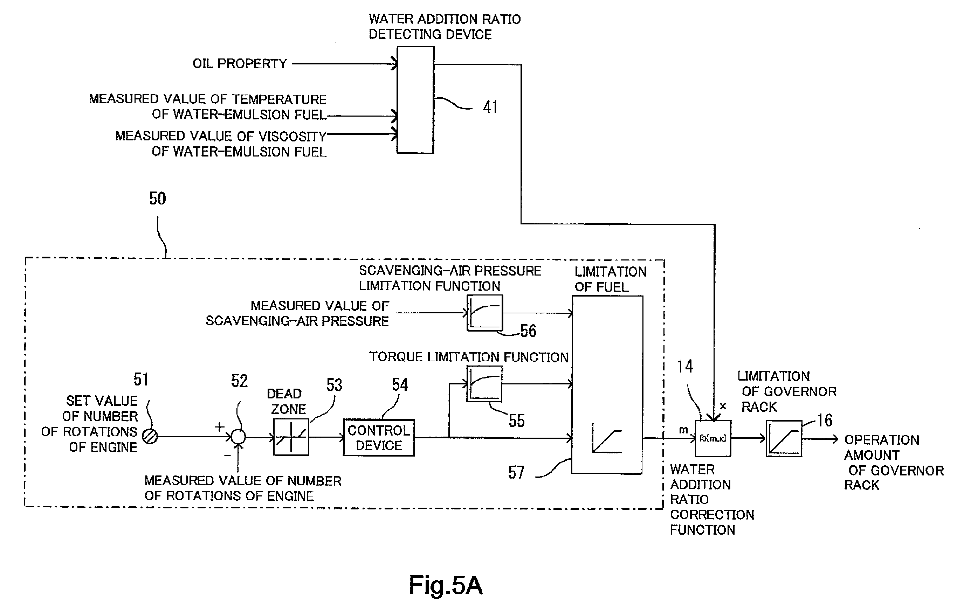

The operation controller according to Embodiment 4 shown in Fig. 5A may be preferably utilized for the operation control of the diesel engine in a case where the property of the pure fuel used in the water emulsion is known and the water addition ratio is unknown. If the property of the pure fuel used is known, the water addition ratio of the water-emulsion fuel can be detected by measuring the temperature and viscosity of the water-emulsion fuel. Therefore, the torque of the diesel engine and the number of rotations of the diesel engine can be controlled based on the detected water addition ratio.

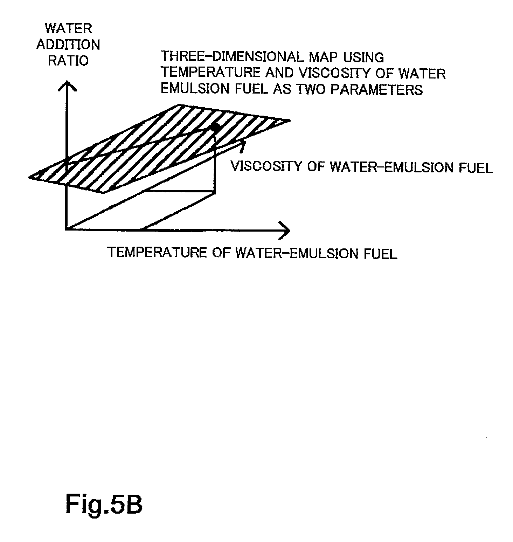

Specifically, as shown in Fig. 5A, the known oil property, and the temperature measured value and viscosity measured value of the water-emulsion fuel measured by the thermometer and viscometer are input to a water addition ratio detecting device 41. The water addition ratio detecting device 41 is configured to be able to refer to the three-dimensional map showing the relation among the water addition ratio and two parameters that are the temperature and the viscosity shown in Fig. 5B. The water addition ratio detecting device 41 detects the water addition ratio of the water-emulsion fuel based on this three-dimensional map. The water addition ratio detected by the water addition ratio detecting device 41 is regarded as the final water addition ratio x. The water addition ratio x is input to the calculating component 14 together with the fuel injection amount m that is the output of the control portion 50 incorporated in the same manner as in the above embodiments. After receiving these inputs, the calculating component 14 determines the appropriate fuel injection amount of the water-emulsion fuel by the function f₀(m, x). Based on the appropriate fuel injection amount, the governor rack is operated through the limiting component 16 corresponding to the governor rack. With this, even if the water addition ratio of the water-emulsion fuel is unknown, the operation control of the diesel engine can be appropriately carried out.

Each of the above embodiments has exemplified a case where a device disposed in the diesel engine to inject the fuel is the governor utilizing the fuel control rack. Instead of this, the fuel valve may be a solenoid valve. To be specific, the diesel engine according to the present invention is preferably applicable to a so-called electronically controlled type configured to adjust the fuel injection amount by the solenoid valve or the like.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the spirit of the present invention.

### Industrial Applicability

The present invention has an operational advantage of appropriately preventing or suppressing the variations in the output torque and the variations in the number of rotations of the engine without control delay when the water addition ratio of the water-emulsion fuel varies. The present invention can be utilized in various diesel engines, such as a diesel engine for ship, which may use the water-emulsion fuel.

## Claims

1. A method for controlling operations of a diesel engine using a water-emulsion fuel, comprising the step of adjusting a fuel injection amount in accordance with a water addition ratio that is a ratio of water to a fuel.

2. The method according to claim 1, further comprising the step of limiting a required water addition ratio in consideration of characteristics of the water-emulsion fuel, the required water addition ratio being set for a component ratio requirement of an exhaust gas.

3. The method according to claim 2, wherein the required water addition ratio is limited in such a manner that: a difference between a temperature increase required value and a realizable temperature increase limit value is calculated, the temperature increase required value being determined for lowering a viscosity of the water-emulsion fuel up to a predetermined viscosity by heating the water-emulsion fuel; a temperature increase of the water-emulsion fuel is suppressed by the difference; and the required water addition ratio is lowered by a water addition ratio width corresponding to a width of the viscosity which is not lowered since the temperature increase of the water-emulsion fuel is suppressed.

4. The method according to any one of claims 1 to 3, wherein:
the diesel engine uses a fuel control rack as a governor to adjust the fuel injection amount; and
limit of movement of the fuel control rack is changed in accordance with the water addition ratio.

5. The method according to any one of claims 1 to 4, comprising the steps of:
determining a pure fuel injection amount by a control means set to use a pure fuel; and
correcting the pure fuel injection amount in accordance with the water addition ratio to calculate the fuel injection amount of the water-emulsion fuel.

6. The method according to claim 1 or 2, comprising the steps of:
measuring a temperature and viscosity of a pure fuel to identify a property of the pure fuel; and
limiting the water addition ratio based on the identified property and a temperature upper limit and viscosity upper limit corresponding to the identified property.

7. The method according to claim 1, comprising the steps of:
when a property of a pure fuel is known, measuring a temperature and viscosity of the water-emulsion fuel to detect the water addition ratio of the water-emulsion fuel; and
adjusting the fuel injection amount in accordance with the water addition ratio.

8. An operation controller being attached to a diesel engine using a water-emulsion fuel and carrying out the method according to any one of claims 1 to 7.

9. A diesel engine using a water-emulsion fuel and carrying out the method according to any one of claims 1 to 7.

10. A ship comprising the diesel engine according to claim 9.
